Europäisches Patentamt

(19) European Patent Office

Office européen des brevets

(11) Publication number: **0 095 521**
**B1**

(12) EUROPEAN PATENT SPECIFICATION

(45) Date of publication of patent specification: **01.10.86**

(21) Application number: **82104835.2**

(22) Date of filing: **02.06.82**

(51) Int. Cl.⁴: **H 04 N 5/80,** G 11 B 9/08

(54) **Electrostatic voltage detecting device.**

(43) Date of publication of application:
**07.12.83 Bulletin 83/49**

(45) Publication of the grant of the patent:
**01.10.86 Bulletin 86/40**

(84) Designated Contracting States:
**DE FR GB NL**

(56) References cited:
**DE-A-2 213 918**
**DE-B-2 413 498**
**GB-A-2 060 980**
**US-A-3 256 481**

(73) Proprietor: **Kabushiki Kaisha Toshiba**
**72, Horikawa-cho Saiwai-ku**
**Kawasaki-shi Kanagawa-ken 210 (JP)**

(72) Inventor: **Sawazaki, Norikazu**
**2-31-27, Fujizuka**
**Kohoku-ku Yokohama-shi (JP)**

(74) Representative: **Henkel, Feiler, Hänzel & Partner**
**Möhlstrasse 37**
**D-8000 München 80 (DE)**

Courier Press, Leamington Spa, England.

EP 0 095 521 B1

# Description

The present invention relates to an electrostatic voltage detecting device for detecting electrostatic voltage generated by electrostatic induction.

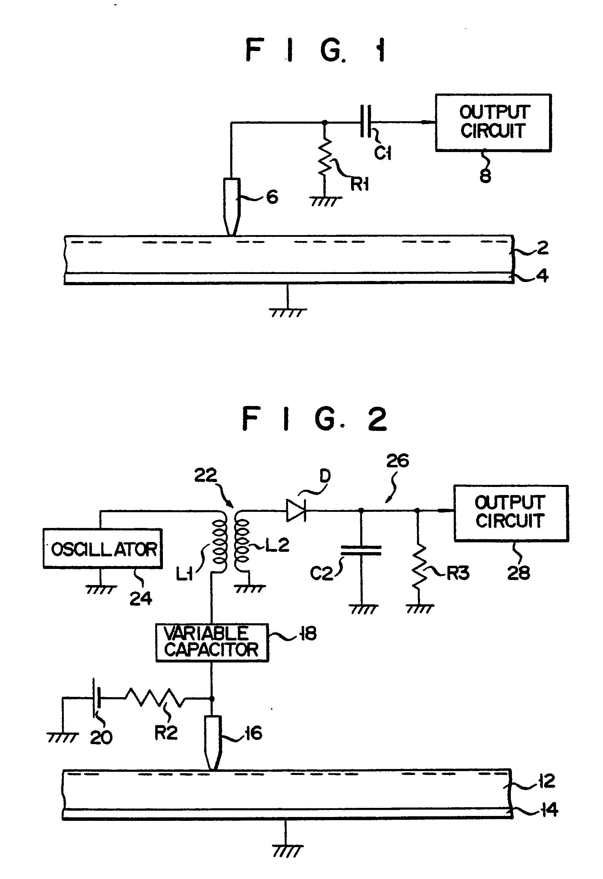

There is known a device for electrostatically recording and reproducing information signal such as picture image and sound. The electrostatic recording and reproducing device of this type has a recording medium including an insulating plate 2 formed of an insulative material such as Teflon (trade name) and capable of storing electric charge, and a conductive layer 4 formed on the insulating plate 2, as shown in Fig. 1. Information signal is recorded in the form of signal charge by applying a signal voltage to a metal needle electrode (not shown), which is moved relative to the insulating plate 2, so as to inject into the insulating plate 2 charges of an amount corresponding to the signal voltage applied. When it is required to read out information signal thus recorded, a reproducing electrode 6 is moved relative to the insulating plate 2 to generate a voltage between the reproducing electrode 6 and the signal charge. Electrostatic voltage thus sensed is applied, as a reproducing signal, to an output circuit 8 through a CR circuit which includes a resistor R1 and a capacitor C1, whereby a static distribution of electric charge stored in the insulating plate 2 can be detected. In the case of this electrostatic reproducing device, however, it is impossible to obtain a reproducing signal having a level accurately corresponding to the quantity of electrostatic charge injected into the insulating plate 2. In addition, this reproduced signal is low in its S/N ratio.

Document US—A—3,256,481 discloses an electrostatic fields sensing device in which an information carrier of the ferroelectric and/or thermoplastic type having a conductive base layer and an active information storage layer with ferroelectric and/or thermoplastic properties moves in front of a sensing member. The information carrier which may be in the form of a tape moves through a conductive gate which can be set to any desired level of potential by means of a variable voltage source, thereby adjusting the surface potential of the tape. The sensing member is combined with a driving coil which has a grounded center-tap forming two arms of a bridge. This bridge can be balanced with the aid of a variable capacitance and resistance. An oscillator excites the bridge, and a demodulator produces an output signal corresponding to the signals stored in the form of a surface potential.

An object of the present invention is to provide an electrostatic voltage detecting device capable of detecting with high sensitivity electrostatic voltage generated by electrostatic induction.

According to the present invention there is provided an electrostatic voltage detecting device comprising detecting means arranged movably along the surface of a recording medium to detect electrostatic voltage generated by the surface charge of said recording medium, first inductance means combined with said detecting means to form a circuit whose frequency changes and signal generating means for detecting a change in the frequency of said circuit and generating an output signal corresponding to this frequency change, said electrostatic voltage detecting device being characterized in that a metal electrode is connected to part of a semiconductor member which is provided in said detecting means to form a depletion layer in that contact area of the semiconductor member which is in contact with the metal electrode, said depletion layer forming a capacitance, the width of the depletion layer changing in accordance with a voltage detected by the semiconductor member, and a change of the width causing a change of the capacitance of said depletion layer, that the first inductance means is connected to said metal electrode, said circuit forming a resonance circuit whose resonance frequency changes in accordance with the width of the depletion layer is formed in the contact area of said semiconductor member, and that said signal generating means detects a change in the resonance frequency.

In the present invention, the variable capacitor formed by the depletion layer and having its capacitance changed according to a detected electrostatic voltage is used to form the resonance circuit. Therefore, the distribution of charge stored in the recording medium can be detected with high accuracy by detecting the change in the resonance frequency of the resonance circuit.

This invention can be more fully understood from the following detailed description when taken in conjunction with the accompanying drawings, in which:

Fig. 1 is a circuit diagram schematically showing the reproducing section of a conventional electrostatic recording and reproducing device;

Fig. 2 is a circuit diagram of an electrostatic reproducing device in which an electrostatic voltage detecting device according to one embodiment of this invention is employed;

Fig. 3 is a circuit diagram showing a condenser microphone in which an electrostatic voltage detecting device according to another embodiment of this invention is employed;

Fig. 4 is a circuit diagram showing an electrostatic reproducing device in which an electrostatic voltage detecting device according to a further embodiment of this invention is employed; and

Fig. 5 is a circuit diagram showing a modification of the electrostatic reproducing device of Fig. 1.

Fig. 2 shows the reproducing section of an electrostatic recording and reproducing system which includes an electrostatic voltage detecting device of one embodiment according to the present invention. The electrostatic voltage detecting device includes an insulating film 12 made of a material such as Teflon (trade name) and capable of storing electric charge, a conductive layer 14 formed on a surface of the insulating film 12, and a conductive reproducing electrode 16 which is placed adjacent to or in contact with the other surface of the insulating film 12 and moved relative to the insulating film 12 to detect electrostatic voltage generated by electrostatic induction due to electrostatic charge injected into the other surface area of insulating film 12. The electrostatic voltage detecting device further includes a variable capacitor 18 such as variable capacitance diode whose capacitance changes according to an output voltage of the reproducing electode 16, the output voltage having a level corresponding to the quantity of charge at a portion currently detected, a battery 20 for applying a predetermined DC reverse bias voltage to the variable capacitance diode 18 through a resistor R2, superposing it on an output voltage of the reproducing electrode 16, a resonance transformer 22 having a primary winding L1 combined with the variable capacitance diode 18 to form a resonance circuit, an oscillator 24 for supplying an output voltage of predetermined frequency to the resonance circuit, and a detector circuit 26 connected to a secondary winding L2 of the resonance transformer 22 and including a diode D, a capacitor C2 and a resistor R3.

The battery 20 supplies a predetermined DC reverse bias voltage to the cathode of the variable capacitance diode 18 in such a way that the resonance circuit formed of the primary winding L1 and the variable capacitance diode 18 has a resonance frequency substantially equal to an output frequency of the oscillator 24. The reproducing electrode 16 superposes its output voltage corresponding to the quantity of charge stored at a local area of the insulating film 12 on the DC reverse bias voltage applied from the battery 20 and applies the result to the cathode of the variable capacitance diode 18. When the reproducing head 16 is moved relative to the insulating film 12, it generates an output voltage whose level changes in accordance with the quantity of charge stored at an area of the insulating film 12 to be detected. Therefore, the capacitance of the variable capacitance diode 18 changes according to the quantity of charge at an area of the insulating film 12 facing the foremost end of the reproducing head 16. The resonance frequency of the resonance circuit formed of the primary winding L1 and the variable capacitance diode 18 changes accordingly and shifts from the center frequency of the oscillator 24. As the result, the resonance circuit displays a large impedance characteristic with respect to the oscillator 24 and a current flowing to the primary winding L1 is reduced and accordingly a voltage induced across the secondary winding L2 is reduced. This induced voltage is supplied to the output circuit 28 via the detector circuit 26.

According to this embodiment, the amplitude of a reproduced signal can be set within an appropriate level range and the S/N ratio can be made small by appropriately adjusting the oscillating output of the oscillator 24, the resonance characteristic of resonance circuit formed of the primary winding L1 and the variable capacitance diode 18, and the coefficient of coupling between the primary and secondary windings L1 and L2.

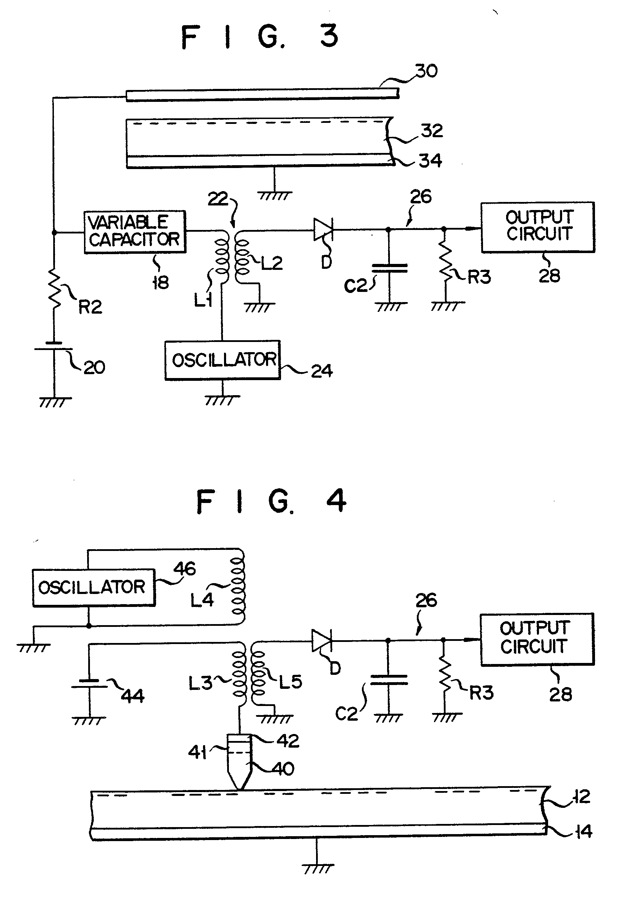

Fig. 3 shows a condenser microphone in which another example of electrostatic voltage detecting device according to the present invention is employed. This electrostatic voltage detecting device is similar in arrangement to the one shown in Fig. 2 except that a diaphragm electrode 30 is used instead of the reproducing electrode 16. As well known, the diaphragm electrode 30 is arranged facing the front surface of an electret plate 32 which has an electrode 34 formed on the back surface and grounded. Electric charge is uniformly stored in the front surface area of the electret plate 32. When the diaphragm 30 is vibrated, a capacitance between the diaphragm 30 and the electret plate 32 changes and a voltage applied to the variable capacitance diode 18 through the diaphragm 30 also changes. A signal voltage is excited through the primary winding L2 as described above and supplied to the output circuit 28 through the detector circuit 26. According to this second embodiment, a signal is generated in accordance with the vibration of the diaphragm 30 at a high S/N ratio over a relatively wide range of amplitude.

Fig. 4 shows the reproducing section of an electrostatic recording and reproducing system which includes a further example of electrostatic voltage detecting device according to the present invention. The electrostatic voltage detecting device is provided with a semiconductor needle 40 made of a material such as P-type silicon, a metal electrode 42 formed on the top of the semiconductor needle 40, a battery 44 for applying a reverse bias voltage between the metal electrode 42 and the semiconductor needle 40 through a coil L3, and an oscillator 46 for exciting a coil L4 inductively coupled with the coil L3. Since a predetermined reverse bias voltage is applied between the semiconductor needle 40 and the metal electrode 42, a depletion layer 41 is formed at the end portion of the semiconductor needle 40 where the semiconductor needle 40 contacts the metal electrode 42. The width of depletion layer 41 changes according to the quantity of charge detected by the semiconductor needle 40 when the semiconductor needle 40 is moved relative to the insulating plate 12 and along the surface of the insulating plate 12. Namely, the resonance frequency of the serial resonance circuit formed of the depletion layer 41 of the semiconductor needle 40 and the coil L3 changes in accordance with the charge distribution at the surface area of the insulating plate 12. Therefore, a current flowing through the coil L3 changes according to the change in the quantity of charge in the surface area of the insulating plate 12. As the result, a voltage induced through a coil L5 which is inductively coupled with the coil L3 changes, too. This induced voltage is supplied through the detector circuit 26 to the output circuit 28. Since the extent to which resonance frequency of the resonance circuit is shifted from the center oscillating frequency of the oscillator 46 also changes in accordance with the distribution of the surface charge of the insulating plate 12 in this embodiment, a voltage signal having a wide range of amplitude and a large S/N ratio can be generated through the coil L5 by appropriately setting the oscillating output of the oscillator 46 and the resonance characteristic of the resonance circuit.

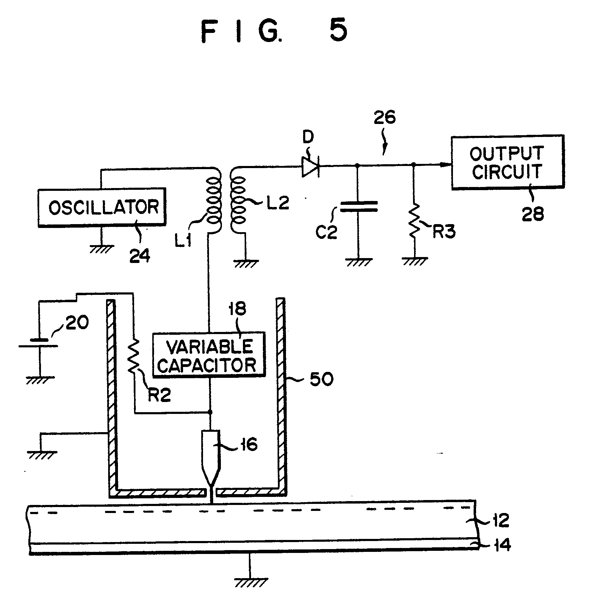

Fig. 5 shows a modification of the reproducing device shown in Fig. 1. The reproducing device is similar to that of Fig. 1 except that the reproducing electrode 16 has an extremely thin metal film or wire on the tip end thereof and a metal shield box 50 is further provided in which the reproducing electrode 16, variable capacitance diode 18 and resistor R2 are received. The bottom wall of the shield box has an opening through which the thin metal film or wire of the reproducing electrode 16 extends outwardly. The shield box 50 is so mounted that the bottom wall may be placed near and substantially in parallel to the insulating film 12. Use of the shield box 50 protects the reproducing electrode 16 from being affected by charges shored in other portions than a portion currently detected. Further, since, in this example, the extremely thin metal film or wire is used, signal information can be recorded and reproduced with a high resolution.

Although the present invention has been described referring to some embodiments, it should be understood that the present invention is not limited to these embodiments. In the embodiment shown in Fig. 3, for example, the electret plate 32 may be removed and high voltage may be applied between the diaphragm electrode 30 and the back surface electrode 34 to change the capacitance of variable capacitance diode 18 in accordance with the vibration of the diaphragm electrode 30. A pickup stylus for tracing the groove on a record disc may be employed instead of the diaphragm electrode 30 in the embodiment shown in Fig. 3 to form a condenser pickup.

Oscillating frequency of the oscillator is set substantially equal to center resonance frequency of the resonance circuit in the above-described embodiments, but the oscillating frequency may be set apart from the center resonance frequency where the resonance circuit has a gentle resonance characteristic. The semiconductor needle 40 is made of P-type silicon in the embodiment shown in Fig. 4, but it may be made of N-type silicon.

## Claims

1. An electrostatic voltage detecting device comprising:
detecting means arranged movably along the surface of a recording medium (12) to detect electrostatic voltage generated by the surface charge of said recording medium (12), first inductance means (L3) combined with said detecting means to form a circuit (L3, 44) whose frequency changes and signal generating means (46) for detecting a change in the frequency of said circuit and generating an output signal corresponding to this frequency change, characterized in that a metal electrode (42) is connected to part of a semiconductor member (40) which is provided in said detecting means to form a depletion layer (41) in that contact area of the semiconductor member (40) which is in contact with the metal electrode (42), said depletion layer (41) forming a capacitance, the width of the depletion layer (41) changing in accordance with a voltage detected by the semiconductor member (40), and a change of the width causing a change of the capacitance of said depletion layer, that the first inductance means (L3) is connected to said metal electrode (42), said circuit forming a resonance circuit whose resonance frequency changes in accordance with the width of the depletion layer (41) formed in the contact area of said semiconductor member (40), and that said signal generating means detects a change in the resonance frequency.

2. An electrostatic voltage detecting device according to claim 1, characterized by comprising bias means for applying a reverse bias voltage between the semiconductor member (40) and the metal electrode (42) through the first inductance means (L3, L5), the reverse bias voltage being superposed on a voltage detected by the semiconductor member (40) to determine the width of the depletion layer (41) formed in the contact area of said semiconductor member.

3. An electrostatic voltage detecting device according to claim 2, characterized in that said signal generating means includes second and third inductance means (L4, L5) inductively coupled with the first inductance means (L3), an oscillating circuit (46) for supplying an oscillating output signal of predetermined frequency to the second inductance means (L4); and a detector circuit (26) connected to the third inductance means (L5) to detect a voltage signal excited through the third inductance means (L5).

## Patentansprüche

1. Detektor für elektrostatische Ladungen (Spannungen), umfassend
eine längs der (Ober-)Fläche eines Aufzeichnungsträgers (12) bewegbar angeordnete Detektoreinrichtung zum Abgreifen der durch die Oberflächenladung des Aufzeichnungsträgers (12) erzeugten elektrostatischen Spannung, ein erstes Induktivitätsmittel (L3), das mit der Detektoreinrichtung zur Bildung einer Schaltung (L3, 44), deren Frequenz sich ändert, kombiniert ist, und eine Signalerzeugungseinrichtung (46) zum Abgreifen einer Frequenzänderung der Schaltung und zum Erzeugen eines dieser Frequenzänderung entsprechenden Ausgangssignals, dadurch gekennzeichnet, daß eine Metallelektrode (42) an einen Teil eines in der Detektoreinrichtung vorgesehenen Halbleiterelements (40) angeschlossen ist, um in dem mit der Metallelektrode (42) in Kontakt stehenden Kontaktbereich des Halbleiterelements (40) eine Verarmungsschicht (41) zu bilden, wobei die Verarmungsschicht (41) eine Kapazität bildet, die Breite der Verarmungsschicht (41) sich in Abhängigkeit von einer durch das Halbleiterelement (40) abgegriffenen Spannung ändert und eine Änderung der Breite eine Änderung der Kapazität der Verarmungsschicht hervorruft, daß das erste Induktivitätsmittel (L3) mit der Metallelektrode (42) verbunden ist, wobei die genannte Schaltung einen Resonanzkreis bildet, dessen Resonanzfrequenz sich in Abhängigkeit von der Breite der im Kontaktbereich des Halbleiterelements (40) gebildeten Verarmungsschicht (41) ändert, und daß die Signalerzeugungseinrichtung eine Änderung in der Resonanzfrequenz erfaßt.

2. Detektor für elektrostatische Ladungen (Spannungen) nach Anspruch 1, gekennzeichnet, durch eine Vorspanneinrichtung zum Anlegen einer Sperrvorspannung zwischen das Halbleiterelement (40) und die Metallelektrode (42) über das erste Induktivitätsmittel (L3, L5), wobei die Sperrvorspannung einer durch das Halbleiterelement (40) abgegriffenen Spannung überlagerbar ist, um die Breite der im Kontaktbereich des Halbleiterelements gebildeten Verarmungsschicht (41) zu bestimmen.

3. Detektor für elektrostatische Ladungen (Spannungen) nach Anspruch 2, dadurch gekennzeichnet, daß die Signalerzeugungseinrichtung zweite und dritte, induktiv an das erste Induktivitätsmittel (L3) angekoppelte Induktivitätsmittel (L4, L5), einen Schwingkreis (46) zur Lieferung eines schwingenden Ausgangssignals einer vorbestimmten Frequenz zum zweiten Induktivitätsmittel (I4) und einen mit dem dritten Induktivitätsmittel (L5) verbundenen Detektorkreis (26) zum Abgreifen oder Erfassen eines über das dritte Induktivitätsmittel (L5) angeregten Spannungssignals aufweist.

**Revendications**

1. Dispositif de détection de tension électrostatique, comprenant:
un moyen de détection conçu de manière à pouvoir se déplacer le long de la surface d'un support d'enregistrement (12) pour détecter la tension électrostatique produite par les charges de surface dudit support d'enregistrement (12), un premier moyen d'inductance (L3) combiné avec ledit moyen de détection pour former un circuit (L3, 44) dont la fréquence varie et un moyen générateur de signaux (46) servant à détecter une variation de la fréquence dudit circuit et à produire un signal de sortie correspondant à cette variation de fréquence, caractérisé en ce qu'une électrode métallique (42) est connectée à une partie d'une élément semiconducteur (40) qui est prévu dans ledit moyen de détection pour former une couche d'appauvrissement (41) dans l'aire de contact de l'élément semiconducteur (40) qui est en contact avec l'électrode métallique (42), ladite couche d'appauvrissement (41) formant une capacité, la largeur de la couche d'appauvrissement (41) variant en fonction de la tension détectée par l'élément semiconducteur (40), et une variation de la largeur provoquant une variation de la capacité de la couche d'appauvrissement, en ce que le premier moyen d'inductance (L3) est connecté à ladite électrode métallique (42), ledit circuit formant un circuit de résonance dont la fréquence de résonance varie en fonction de la largeur de la couche d'appauvrissement (41) formée dans l'aire de contact de l'élément semiconducteur (40), et en ce que ledit moyen générateur de signaux détecte une variation de la fréquence de résonance.

2. Dispositif de détection de tension électrostatique selon la revendication 1, caractérisé en ce qu'il comprend un moyen de polarisation servant à appliquer une tension de polarisation inverse entre l'élément semiconducteur (40) et l'électrode de métal (42) par l'intermédiaire du premier moyen d'inductance (L3, L5), la tension de polarisation inverse se superposant à la tension détectée par l'élément semiconducteur (40) pour déterminer la largeur de la couche d'appauvrissement (41) formée dans l'aire de contact de l'élément semiconducteur.

3. Dispositif de détection de tension électrostatique selon la revendication 2, caractérisé en ce que ledit moyen générateur de signaux comporte un deuxième et un troisième moyen d'inductance (L4, L5) couplés par induction avec le premier moyen d'inductance (L3), un circuit oscillant (46) servant à fournir un signal de sortie oscillant d'une fréquence prédéterminée au deuxième moyen d'inductance (L4); et un circuit détecteur (26) connecté au troisième moyen d'inductance (L5) afin de détecter le signal de tension excité par l'intermédiaire du troisième moyen d'inductance (L5).

0 095 521

# F I G. 1

OUTPUT CIRCUIT

C1

R1

6

2

4

8

# F I G. 2

22

D

26

OSCILLATOR

L1

L2

C2

R3

OUTPUT CIRCUIT

24

VARIABLE CAPACITOR

18

28

20

R2

16

12

14

1

0 095 521

## F I G. 3

## F I G. 4

2

# F I G.  5